Europäisches Patentamt

European Patent Office

Office européen des brevets

(19)

(11) Publication number: **0 388 539**

**A1**

## (12) EUROPEAN PATENT APPLICATION

(21) Application number: **89302711.0**

(22) Date of filing: **20.03.89**

(51) Int. Cl.⁵: **B60B 7/06**

(43) Date of publication of application:
**26.09.90 Bulletin 90/39**

(84) Designated Contracting States:
**BE DE FR GB IT NL SE**

(71) Applicant: **Liu, Wen-Chung**
**2 Fl.,No. 26,Alley 16,Lane 22 Wen Teh Road**
**Taipei(TW)**

(72) Inventor: **Liu, Wen-Chung**
**2 Fl.,No. 26,Alley 16,Lane 22 Wen Teh Road**
**Taipei(TW)**

(74) Representative: **Dodd, David Michael et al**
**Barlow Gillett & Percival Hollins Chambers**
**64A Bridge Street**
**Manchester M3 3BA(GB)**

(54) **Fixing elements for wheel cap.**

(57) A fixing element for fixing a wheel cap (30) onto a wheel body (10), the fixing element including a plastic snap (40) and a resilient blade (50) for fixing the wheel cap (30) onto the wheel body (10) by exerting a tightening force; characterized in that: the plastic snap (40) includes four extended parts (41), (42), (43) and (44), and a perforation (45); the resilient blade (50) has a vertical end (51) and a horizontal end (52), and a hole (53) on the horizontal end (52). The wheel cap (30) is provided with a plurality of cutouts (33) for retaining the plastic snap (40) and a plurality of holes (34) for fitting the resilient blade (50). A pin holder (35) is provided at both sides of each cutout (33). The plastic snap (40) is fits pivotally within the wheel cap (30) by a pin (46) which passes through the perforation (45) of the plastic snap (40) and both ends of the pin (46) are fixed by the pin holders (35) at both ends of the cutout (33). The vertical end (51) of the resilient blade (50) fits snugly at a position between a face cap (31) and a peripheral flange (32) of the wheel cap (30). The horizontal end (52) of the resilient blade (50) is fixed to a wall of the peripheral flange (32) by a rivet (54) through the hole (53) of the resilient blade (50) and the hole (34) formed on the wall of the peripheral flange (32).

FIG. 1

## FIXING ELEMENTS FOR WHEEL CAP

The present invention relates generally to fixing elements for wheel caps, and more particularly, to fixing elements for wheel caps used in medium or large sized trucks, coaches or buses.

To ornament a vehicle with wheel caps is already well-known in the prior art. Besides the function of beautification, wheel caps protect the car wheel and the hub from being contaminated by dirt or slurry.

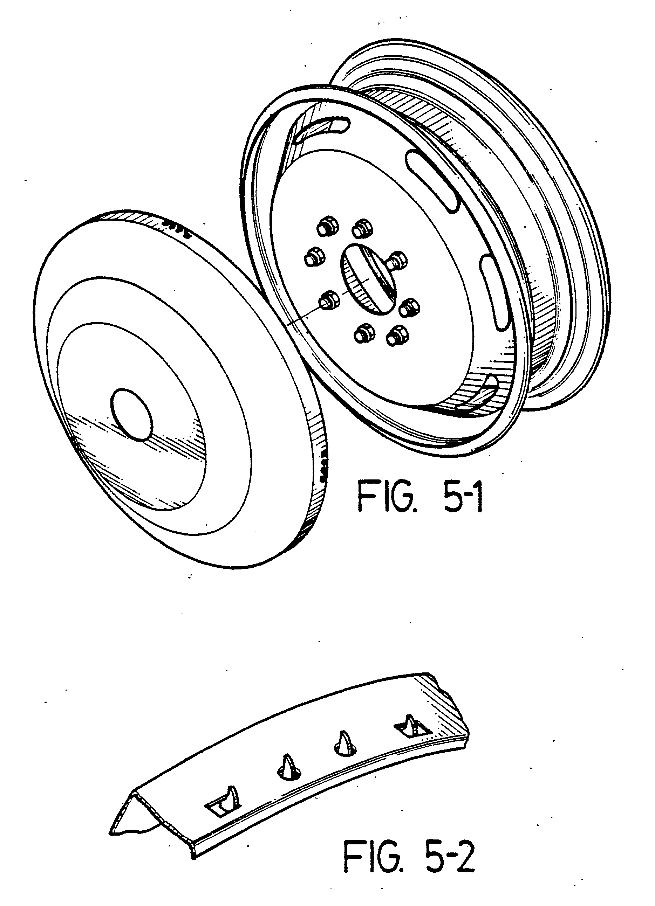

Heretofore, wheel caps for large-sized vehicle have been fitted by a plurality of spring-loaded clips as depicted in FIGS. 5-1 and 5-2 so as to be mounted onto the sidewall of the wheel body. These spring-loaded clips are not capable of assuring safe fitting of the wheel cap and are very dangerous, especially when driving on the freeway.

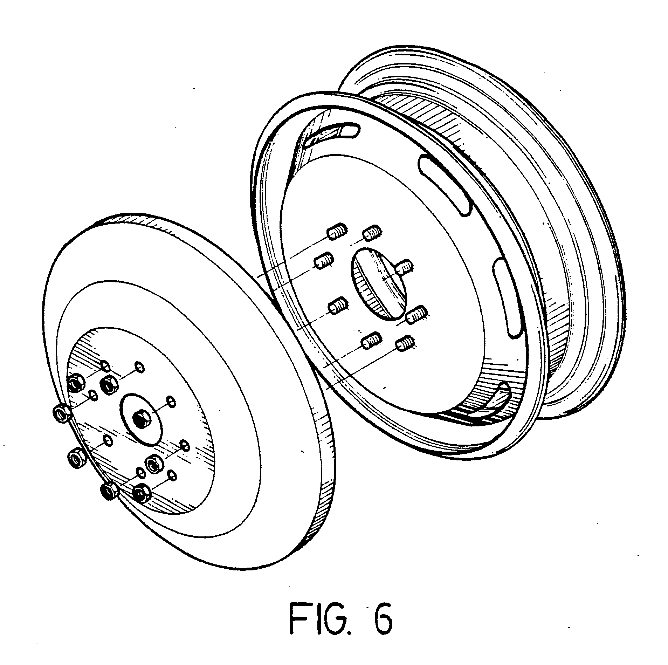

Accordingly, various fixing elements for wheel caps have been developed to solve the aforementioned problem. One of them can be seen in FIG. 6, wherein at least eight bolts must be employed to lock the wheel cap onto the wheel body. Such a method is very inconvenient with respect to the job of mounting or dismounting a wheel cap onto or out of a wheel body for changing the tyre, tyre inspection or the like.

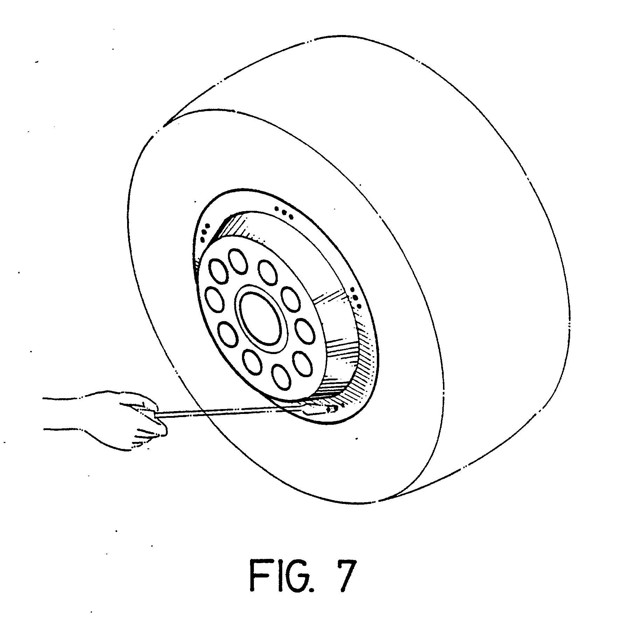

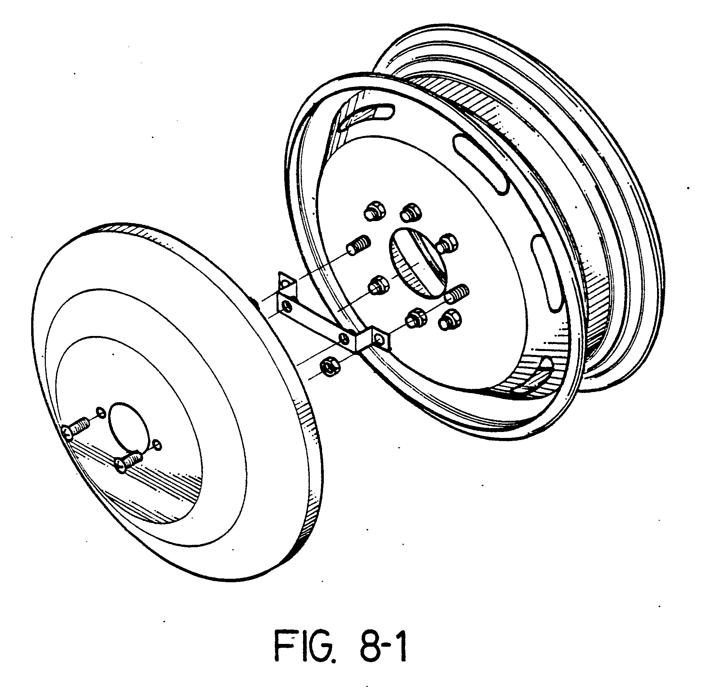

FIG. 7 shows a wheel cap that is at present commonly utilized in Europe, wherein, the wheel cap is further provided with a plurality of screw holes in order to be locked onto the wheel body. This mode of mounting and dismounting the wheel cap is also quite troublesome and uneconomical.

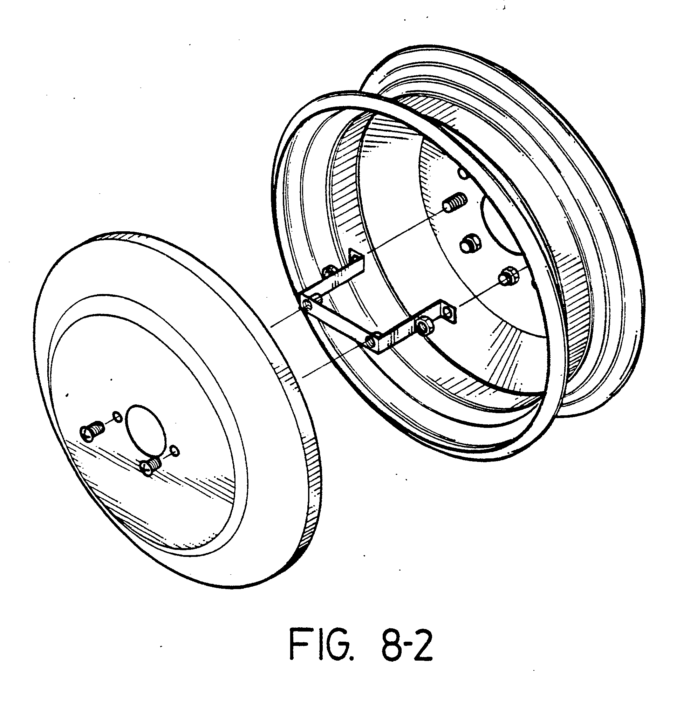

In Taiwan, the wheel caps shown in FIGS. 8-1 and 8-2 are commonly employed. FIG. 8-1 shows a wheel cap for the front wheel body, in which a short U-shaped bracket is screwed onto the axle of the wheel body. FIG. 8-2 shows a wheel cap for the rear wheel body, in which a long U-shaped bracket is screwed onto the axle of the wheel body. Such fixing elements are inconvenient to use especially when inflating the rear tyre of the vehicle and are not safe to use.

Conclusively, the major drawback of conventional fixing elements for wheel caps arises from the very large force that must be exerted for rigid engagement. Therefore, it is rather difficult for one to perform the mounting or dismounting job without the aid of implements available in the workshop.

These and other features and advantages of the present invention which will be apparent from a careful reading of the detailed description provided hereinbelow with appropriate reference to the attached drawings is accomplished by a fixing element for fixing a wheel cap onto a wheel body, said fixing element comprising a plastic snap and a resilient blade for fixing said wheel cap onto said wheel body by exerting a tightening force thereto; characterized in that: said plastic snap is substantially a body having an irregular shaped cross-section with four projecting ends, and a perforation extending therethrough; and said resilient blade has a width substantially equal to a thickness of said plastic snap and having a vertical end and a horizontal end, and a hole formed on said horizontal end.

In the drawings:

FIG. 1 is a perspective view of a fixing element embodying the present invention;

FIG. 2-1 is a perspective view showing the structure of a wheel body and a wheel cap embodying the present invention;

FIG. 2-2 is an exploded view of the fixing element showing its engagement with the wheel cap;

FIGS. 3-1 through 3-16 show the fitting of the fixing element onto the wheel cap;

FIG. 4 is a sectional view of the fixing element showing its engagement with a tyre, a wheel body and a wheel cap;

FIGS. 5-1 and 5-2 show a conventional wheel cap fitting;

FIG. 6 is a view showing another conventional wheel cap fitting;

FIG. 7 is a view showing a further conventional wheel cap fitting; and

FIGS. 8-1 and 8-2 show yet another conventional wheel cap fitting.

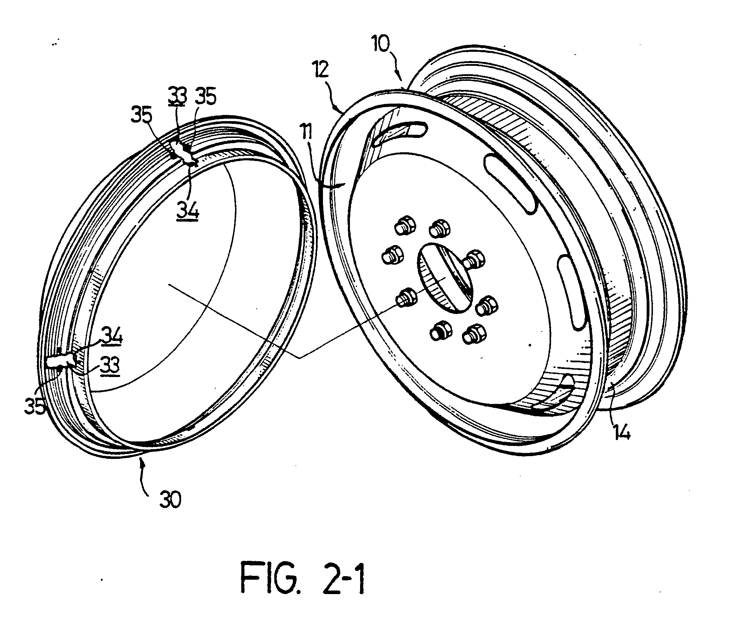

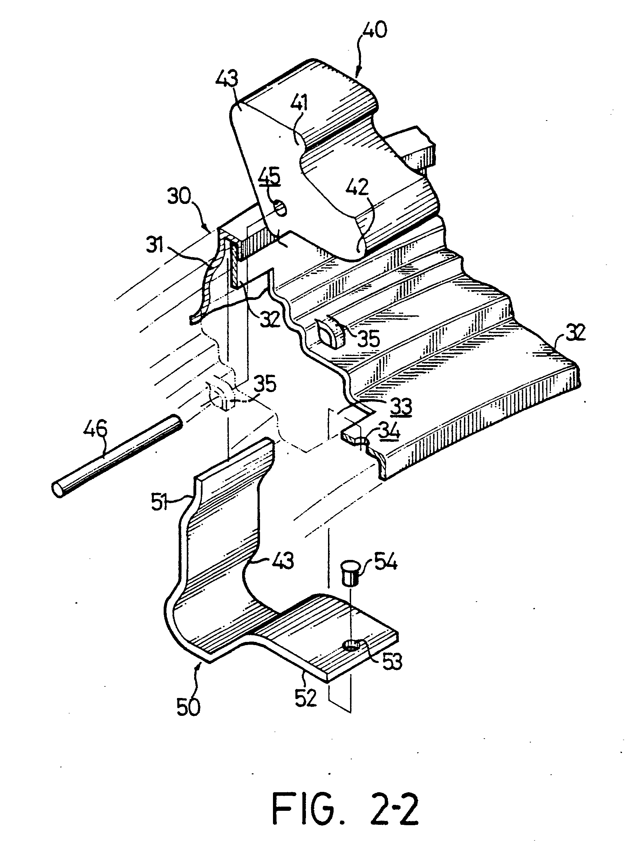

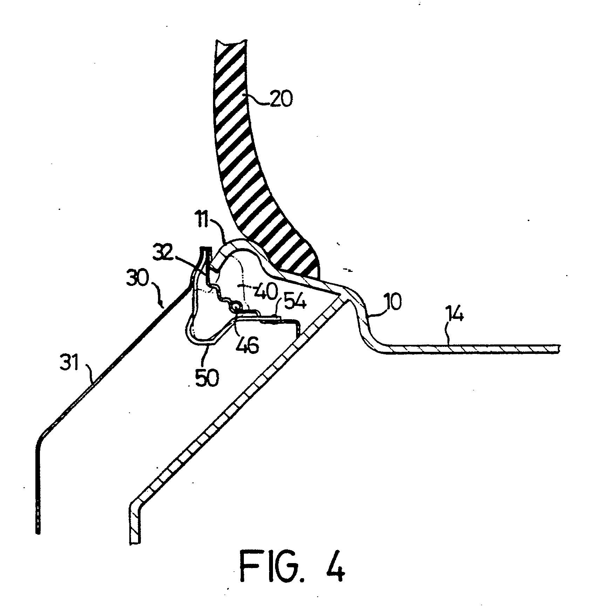

Before describing the structure of the fixing element, it is essential to have some fundamental understanding of the structure of the wheel body and the wheel cap. Referring initially to FIG. 2-1 for this purpose, it can be seen that a commonly used wheel body 10 has an outer sidewall 11 whereon a wheel cap 30 is to be covered, a peripheral flange 12 integrally formed at the periphery of the outer sidewall 11, and a channel 14 whereon a tyre 20 (see FIG. 4) is to be located. The wheel cap 30 is employed to cover the wheel body 10 along the peripheral flange 12 of the wheel body 10. The wheel cap 30 includes a face cap 31 for covering the outer sidewall 11 of the wheel body 10 and a peripheral flange 32 integrally formed at the periphery of the face cap 31 for covering the peripheral flange 12 of the wheel body 10.

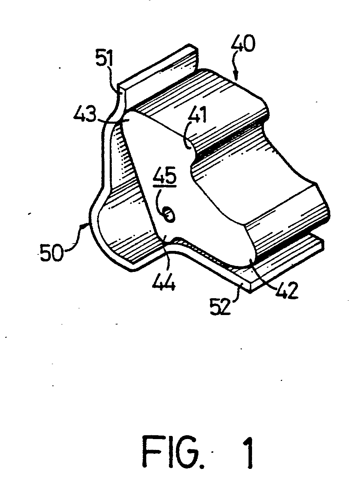

Referring now to FIGS. 1 and 2-2, it can be seen that a fixing element in accordance with the present invention comprises a plastic snap 40 and a resilient blade 50 for fixing the wheel cap 30 onto the wheel body 10 by exerting a tightening force thereto.

The plastic snap 40 is substantially a body having an irregular shaped cross-section developed to a certain thickness. Upon side elevational view, it can be clearly seen that the plastic snap 40 includes four extended parts 41, 42, 43 and 44, and a perforation 45 extending therethrough.

The plastic snap 40 can be made by injection molding of any suitable plastic material, for example, polyurethane, to give the required resiliency.

The resilient blade 50 has a width substantially equal to the thickness of the plastic snap 40. When viewed from the side, it can be clearly seen that the resilient blade 50 is substantially an L-shaped blade having a vertical end 51 and a horizontal end 52. The horizontal end 52 is formed with a hole 53.

The resilient blade 50 is preferably made of spring steel to provide the required resiliency and tensile strength.

It is appreciated that the configuration of the plastic snap 40 and resilient blade 50 matches with the outer face of the wheel body 10 and the inner face of the wheel cap 30 so as to combine the wheel cap 30 and the wheel body 10 conveniently.

Referring particularly to FIGS. 2-1 and 2-2, as has been mentioned previously, the conventional wheel cap 30 includes a face cap 31 and a peripheral flange 32 clamped to the periphery of the face cap 31. The wheel cap 30 in accordance with the present invention is further provided with a plurality of cutouts 33 for retaining the plastic snap 40 and a plurality of holes 34 for fitting the resilient blade 50, which will be described more fully hereinbelow. A pin holder 35 is provided at both sides of each cutout 33. Although not limited thereto, it is preferable that the pin holder 35 is formed by cutting a small piece of the wall of the peripheral flange 32 so as to form a lug for holding a pin.

The number of cutouts 33 and holes 34 are therefore equal to the number of fixing elements (i.e., the plastic snaps 40 and the resilient blades 50) to be used in fixing the wheel cap 30 onto the wheel body 10.

The number of the fixing elements to be used in fixing the wheel cap 30 onto the wheel body 10 per se is not critical. However, it is preferable that at least four sets of fixing elements be used for fixing the wheel cap 30 onto the wheel body 10.

The plastic snap 40 can be fitted within the wheel cap 30 by means of a pin 46 which passes through the perforation 45 of the plastic snap 40 and both ends of the pin 46 are fixed by the pin holders 35 at both ends of the cutout 33. The plastic snap 40 is therefore pivotal about the pin 46.

The vertical end 51 of the resilient blade 50 is snugly fitted at a position between the face cap 31 and the peripheral flange 32 of the wheel cap 30. The horizontal end 52 of the resilient blade 50 is fixed to the wall of the peripheral flange 32 by a rivet 54 through the hole 53 of the resilient blade 50 and a hole 34 formed on the wall of the peripheral flange 32.

The resilient blade 50 remains in contact with the plastic snap 40 as long as no force is exerted thereto.

After the assembly of the plastic snap 40 by the pin 46 and the resilient blade 50 by the rivet 54 to the wheel cap 30, the wheel cap 30 can be mounted onto the wheel body 10 simply by pushing the wheel cap 30 toward the wheel body 10.

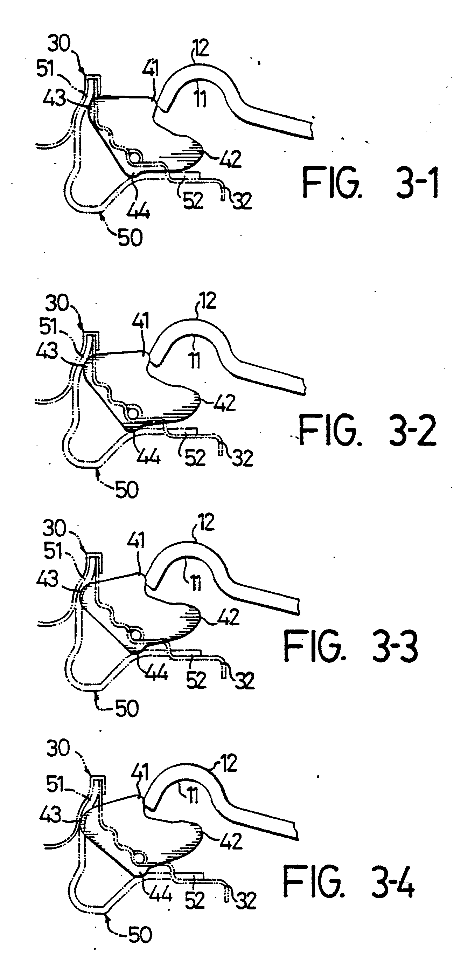

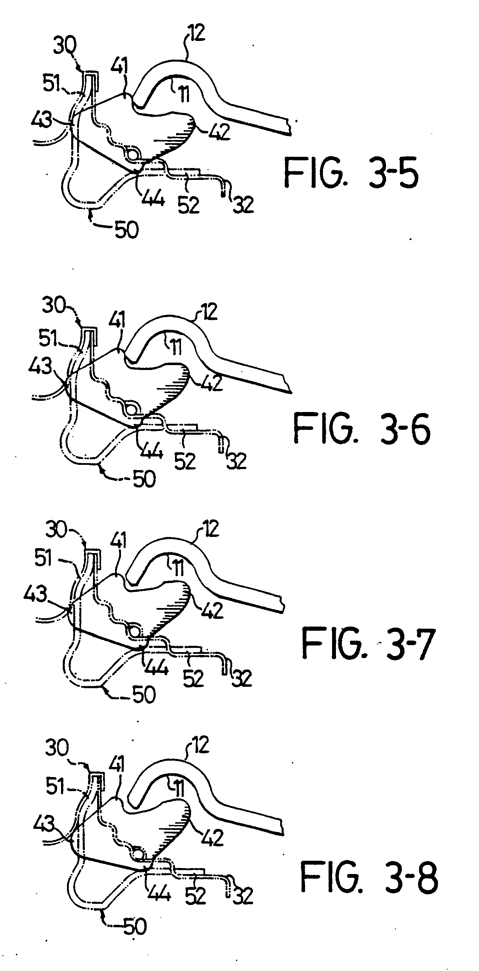

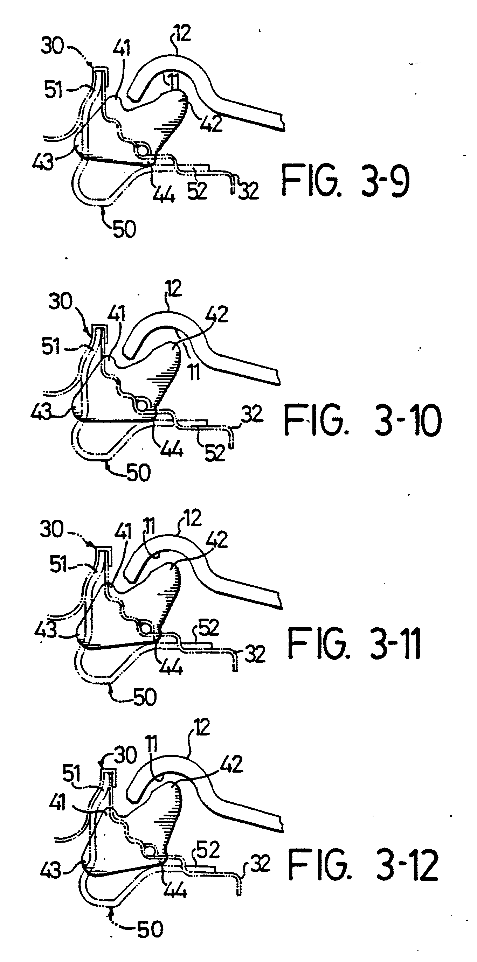

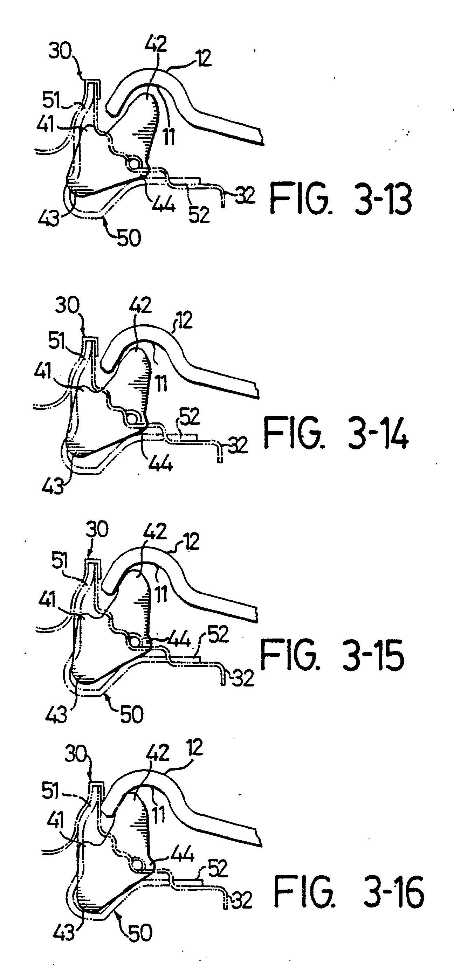

With particular reference to FIGS. 3-1 through 3-16, a series of continuous steps depicting the pushing of the wheel cap toward the wheel body 10 in order to mount the wheel cap 30 onto the wheel body 10 by the fixing element can be seen.

Firstly, the projecting end 41 of the plastic snap 40 is pressed against the peripheral flange 12 of the wheel body 10 and the projecting ends 43 and 44 thus press against the resilient blade 50 so as to maintain a certain required tightening force. Simultaneously, projecting end 42 of the plastic snap 40 comes into contact with the outer sidewall 11 of the wheel body 10 and presses against the outer sidewall 11.

From the steps as shown in FIGS. 3-1 through 3-16, it can be seen that when mounting the wheel cap 30 onto the wheel body 10, the plastic snap 40 is pivotal in a counterclockwise direction about the pin 46 and as such is purposely designed for achieving the best tightening effect and can best be understood from FIGS. 3-9 through 3-16, in which the projecting end 42 is completely inserted into the wheel body 10, and the projecting end 43 is completely inserted into the concavity of the resilient blade 50.

As can be seen in FIG. 4, when the wheel body 10, the tyre 20, and the wheel cap 30 are combined together, the peripheral flange 32 of the wheel cap 30 is tightly clamped between the resilient blade 50 and the peripheral flange 12 of the wheel body 10 while the peripheral flange 12 of the wheel body 10 is tightly clamped between the projecting end 42 of the snap body 40 and the peripheral flange 32 of the wheel cap 30. The projecting ends 43 and 44 of the plastic snap 40 are clamped by the resilient blade 50, thereby rigidly clamping the wheel cap 30.

To dismount the wheel cap 30 from the wheel body 10, a simple implement, for example, a screwdriver, is applied to dislodge the plastic snap 40 from the wheel cap 30, such that the wheel cap 30 can be dislocated from the wheel body 10 with the pin 46 of the plastic snap 40 acting as a pivot in a reverse direction (i.e., clockwise direction). At this juncture, the plastic snap 40 rotates to a position as shown in FIG. 3-9, the force exerted by the resilient blade 50 urges the plastic snap 40 to rotate about the pin 46 in a direction reverse to the position direction in FIGS. 3-1 through 3-16. In the above mentioned manner, all the plastic snaps 40 can be dislodged from the wheel cap 30 and thus the wheel cap 30 can be dismounted from the wheel body 10.

Advantages attainable from embodiments of the present invention include providing a fixing element for wheel caps used on medium or large-sized vehicles, which fixing element is capable of assuring a dependable fixing effect and can be mounted onto or dismounted from a wheel body conveniently.

While the present invention has been described in relation to its preferred embodiment, it is to be understood that numerous modifications, alterations and alternate embodiments may be contemplated by those skilled in the art upon reading this specification. It is envisioned that all such alternate embodiments are considered to be within the scope of the present invention as defined by the appended claims.

## Claims

1. A fixing element for fixing a wheel cap (30) onto a wheel body (10), said fixing element comprising a plastic snap (40) and a resilient blade (50) for fixing said wheel cap (30) onto said wheel body (10) by exerting a tightening force thereto; characterized in that:
said plastic snap (40) is substantially a body having an irregular shaped cross-section including four projecting ends (41), (42), (43) and (44), and a perforation (45) extending therethrough; and said resilient blade (50) has a width substantially equal to a thickness of said plastic snap (40) and having a vertical end (51) and a horizontal end (52), and a hole (53) formed on said horizontal end (52).

2. A fixing element as claimed in claim 1, wherein said plastic snap (40) is made by injection molding of any suitable plastic material.

3. A fixing element as claimed in claim 1 or 2, wherein said resilient blade (50) is made of spring steel.

4. A wheel cap assembly for mounting onto a wheel body (10), said wheel cap assembly comprising a wheel cap (30) and a plurality of fixing elements, characterized in that:
said wheel cap (30) includes a face cap (31), a peripheral flange (32), a same number of that of said fixing elements of cutouts (33) on the peripheral flange (32), a same number of holes (34) on the peripheral flange (32) at a location proximate to an end of each cutout (33), and a pin holder (35) provided at both sides of each cutout (33); and
each said fixing element comprises a plastic snap (40) and a resilient blade (50) for fixing said wheel cap (30) onto said wheel body (10) by exerting a tightening force thereto;
said plastic snap (40) is substantially a body having an irregular shaped cross-section including four projecting ends (41), (42), (43) and (44), and a perforation (45) extending therethrough; and said resilient blade (50) has a width substantially equal to a thickness of said plastic snap (40) and having a vertical end (51) and a horizontal end (52), and a hole (53) formed on said horizontal end (52);
each plastic snap (40) is pivotally fitted within said wheel cap (30) by a pin (46) which passes through said perforation (45) of said plastic snap (40), and both ends of said pin (46) is fixed by said pin holders (35) at both ends of the cutout (33);
each vertical end (51) of said resilient blade (50) is snugly fitted at a position between said face cap (31) and said peripheral flange (32) of said wheel cap (30), each horizontal end (52) of said resilient blade (50) is fixed to a wall of said peripheral flange (32) by a rivet (54) through said hole (53) of said resilient blade (50) and said hole (34) formed on said peripheral flange (32).

5. A wheel cap assembly as claimed in claim 4, wherein said pin holder (35) is a small cutout of the wall of the peripheral flange (32) so as to form a lug.

6. A wheel cap assembly as claimed in claim 4 or 5, wherein four sets of fixing elements are used in fixing the wheel cap (30) onto the wheel body (10).

FIG. 1

FIG. 2-1

FIG. 2-2

FIG. 3-1

FIG. 3-2

FIG. 3-3

FIG. 3-4

FIG. 3-5

FIG. 3-6

FIG. 3-7

FIG. 3-8

FIG. 3-9

FIG. 3-10

FIG. 3-11

FIG. 3-12

FIG. 3-13

FIG. 3-14

FIG. 3-15

FIG. 3-16

FIG. 4

FIG. 5-1

FIG. 5-2

FIG. 6

FIG. 7

FIG. 8-1

FIG. 8-2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 174 650  (NI INDUSTRIES) <br> * Page 3, line 4 - page 4, line 15; figures 3,4 * | 1-3 | B 60 B    7/06 |
| A | GB-A-2 017 017  (ACIERS ET OUTILLAGE PEUGEOT) <br> * Page 2, lines 39-83; figures 1-8 * | 1 | |
| A | US-A-2 394 958  (WOOD) <br> * Page 3, right-hand column, line 7 - page 4, left-hand column, line 2; figures 2,3 * | 1 | |

TECHNICAL FIELDS SEARCHED (Int. Cl.5)

B 60 B

The present search report has been drawn up for all claims

| Place of search | Date of completion of the search | Examiner |
|---|---|---|
| THE HAGUE | 15-11-1989 | AYITER I. |

EPO FORM 1503 03.82 (P0401)